# EUROPEAN PATENT SPECIFICATION

(11) **EP 2 523 508 B1**
(45) Date of publication and mention of the grant of the patent: **28.08.2013**
(21) Application number: 11731677.8
(22) Date of filing: 06.01.2011
(51) Int. Cl.: H04W 52/02

(54) **SIGNAL SENDING METHOD OF BASE STATION AND ENERGY-SAVING BASE STATION**
SIGNALSENDEVERFAHREN FÜR EINE BASISSTATION UND STROMSPARENDE BASISSTATION
PROCÉDÉ D'ÉMISSION DE SIGNAUX POUR STATION DE BASE ET STATION DE BASE À ÉCONOMIE D'ÉNERGIE

(30) Priority: 08.01.2010 CN 201010002219
(43) Date of publication of application: 14.11.2012
(73) Proprietor: Huawei Technologies Co., Ltd., Shenzhen, Guangdong 518129 (CN)
(72) Inventor: HUANG, Yinghua, Guangdong 518129 (CN)
(74) Representative: Kreuz, Georg Maria
(86) International application number: PCT/CN2011/070059
(87) International publication number: WO 2011/082676

(56) References cited:
- CN-A- 101 179 814
- CN-A- 101 489 299
- CN-A- 101 778 459
- HUAWEI: "CR for eNB power saving by changing antenna number", 3GPP DRAFT; 36331_CRXXXX_(REL-9)_R2-094687_CR FOR ENB POWER SAVING BY CHANGING ANTENNA NUMBER, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, no. Shenzhen, China; 20090818, 18 August 2009 (2009-08-18), XP050352421, [retrieved on 2009-08-18]
- "3rd Generation Partnership Project; Technical Specification Group Services and System Aspects; Telecommunication management; Study on Energy Savings Management (ESM) (Release 9)", 3GPP STANDARD; 3GPP TR 32.826, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, no. V1.0.0, 11 December 2009 (2009-12-11), pages 1-22, XP050400732, [retrieved on 2009-12-11]
- ERICSSON ET AL: "Extended cell DTX for enhanced energy-efficient network operation", 3GPP DRAFT; R1-095011{ENERGY EFFICIENCY}, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, no. Jeju; 20091109, 9 November 2009 (2009-11-09), XP050389361, [retrieved on 2009-11-05]
- "eNB power saving by changing antenna number", 3GPP DRAFT; R2-094677 ENB POWER SAVING BY CHANGING ANTENNA NUMBER, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, no. Shenzhen, China; 20090818, 18 August 2009 (2009-08-18), XP050352754, [retrieved on 2009-08-18]

## Description

### FIELD OF THE INVENTION

The present invention relates to a method for sending signals from a base station and an energy-saving base station.

### BACKGROUND OF THE INVENTION

The consumption of electric energy is a significant part of the operation expenditure of a base station of a mobile operator. The operators expect to reduce the overall power of the base station to reduce electric energy consumption and save costs, which caters for the modem trend of environment protection.

A majority of electric energy of the base station is consumed by the power amplifier that transmits signals. In a Long Term Evolution (LTE) system, downlink Reference Symbols (RSs) are necessary for downlink receiving. Even if no data needs to be sent, the base station needs to send downlink RSs regularly. In the same coverage of signals, the power of a single RS is generally unchanged, and the transmit power occupied by the RS is in proportion to the number of RSs. In a multi-antenna system, the transmit power occupied by the RS is also in proportion to the number of antennas.

The LTE system supports many kinds of system bandwidths, the number of RSs is in proportion to the bandwidth of the cell, and greater system bandwidth of the cell involves more RSs to be sent. The transmit power occupied by sending of downlink RFs accounts for a very large proportion of the total downlink transmit power of the cell when few users are activated in the cell, or the air interface load is small, or even no user is activated in the cell. However, if the number of RSs to be sent is reduced by changing the bandwidth of the cell, the cell needs to be reconstructed or all activated users are out of connection, and the dynamic change of the cell bandwidth makes it necessary to recalculate many parameters, which increases the complexity of User Equipment (UE) greatly.

The document HUAWEI: "CR for eNB power saving by changing antenna number", 3GPP DRAFT; 36331_CRXXXX_(REL-9)_R2-094687_CR FOR ENB POWER SAVING BY CHANGING ANTENNA NUMBER, 3RD GENERATION PARTNERSHIP PROJECT (3GPP), MOBILE COMPETENCE CENTRE; 650, ROUTE DES LUCIOLES; F-06921 SOPHIA-ANTIPOLIS CEDEX; FRANCE, no. Shenzhen, China; 2009018, 18 August 2009 (2009-08-18), XP00352421, [retrieved on 2009-08-18*]* discloses that eNB saves power by changing antenna number.

### SUMMARY OF THE INVENTION

The present invention provides a method for sending signals from a base station and an energy-saving base station. Therefore, when the cell load is light, the method changes the bandwidth of transmitting downlink RSs of a cell dynamically to reduce energy consumption of the base station without changing the cell bandwidth which is a critical parameter; and the method relieves impact on the service caused by power consumption reduction but adds no complexity to the UE. According to one aspect of the present invention, a method for sending signals from a base station includes:
setting an energy-saving flag when intending to enter an energy-saving mode, wherein the energy-saving flag corresponds to the energy-saving mode; notifying the energy-saving mode corresponding to the energy-saving flag to a UE; and sending signals in the energy-saving mode corresponding to the energy-saving flag; wherein when the energy-saving flag is a reference symbol energy-saving indication, the sending the signals in the energy-saving mode corresponding to the energy-saving flag comprises: using whole downlink bandwidth dynamically to send data, and sending the reference symbol only in downlink bandwidth with data to be sent.

According to another aspect of the present invention, a method for receiving signals in a user equipment includes:
receiving an energy-saving mode corresponding to an energy-saving flag; and receiving a signal sent in the energy-saving mode corresponding to the energy-saving flag; wherein when the energy-saving flag is a reference symbol energy-saving indication, the receiving the signal sent in the energy-saving mode corresponding to the energy-saving flag comprises: receiving data, the data being sent by using whole downlink bandwidth dynamically, and receiving the reference symbol sent only in downlink bandwidth with data to be received.

According to another aspect of the present invention, an energy-saving base station includes:
an energy-saving flag setting unit, configured to set an energy-saving flag of the base station when intending to enter an energy-saving mode, wherein the energy-saving flag corresponds to the energy-saving mode; an energy-saving mode notifying unit, configured to notify a user equipment the energy-saving mode corresponding to the energy-saving flag;
and a sending unit, configured to send a signal in the energy-saving mode corresponding to the energy-saving flag; wherein the energy-saving flag setting unit comprises a first setting module configured to set an reference symbol energy-saving indication as the energy-saving flag; and the sending unit comprises a first sending module configured to use the whole downlink bandwidth dynamically to send data, and send the reference symbol only in the downlink bandwidth with data to be sent.

In the technical solutions according to the present invention, an energy-saving flag is set when the base station intends to enter the energy-saving mode, and the energy-saving flag may be an RS energy-saving indication, a data transmission bandwidth indication, or an indication of reducing antennas for sending data; the energy-saving mode corresponding to the energy-saving flag is notified to the UE; and then signals are sent in the energy-saving mode after the energy-saving flag is set. In this way, the base station can take multiple energy-saving measures under support of the UE. Therefore, when the cell load is light, the base station can change the bandwidth of transmitting downlink RSs of the cell dynamically to reduce the energy consumption of the base station without changing the cell bandwidth which is a critical parameter; and the base station relieves impact on the service caused by power consumption reduction but adds no complexity to the UE.

### BRIEF DESCRIPTION OF THE DRAWINGS

To make the technical solutions according to the embodiments of the present invention clearer, the following outlines the accompanying drawings involved in description of the embodiments of the present invention:
FIG. 1 is a flowchart of a method for sending signals from a base station provided in an embodiment of the present invention; and
FIG. 2 shows functional units of an energy-saving base station provided in an embodiment of the present invention.

### DETAILED DESCRIPTION OF THE EMBODIMENTS

To make the technical solutions, objectives and merits of the present invention clearer, the following describes the embodiments of the present invention in more detail with reference to accompanying drawings.

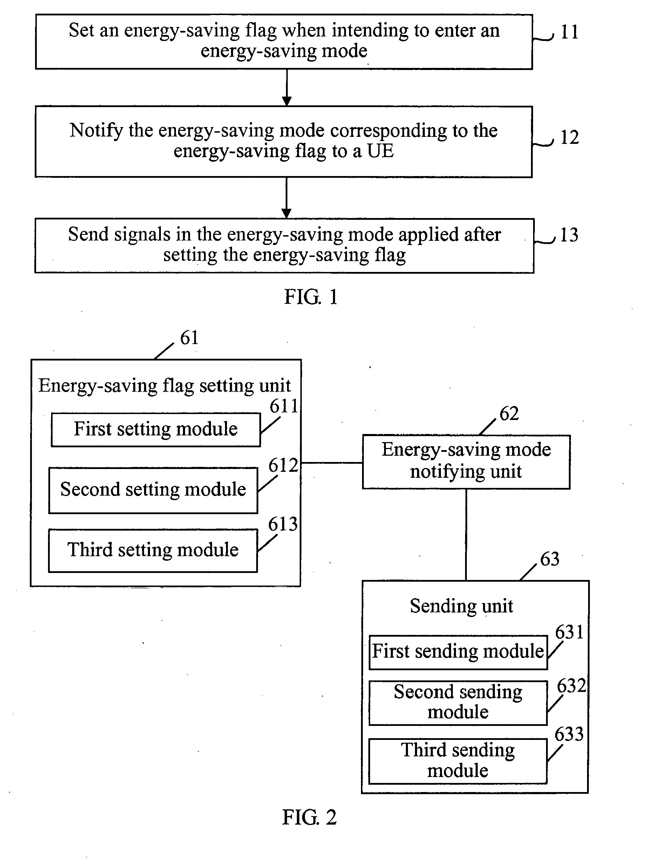

As shown in FIG. 1, a method for sending signals from a base station provided in an embodiment of the present invention includes the following steps:
Step 11: Set an energy-saving flag when intending to enter an energy-saving mode.
   The base station may be triggered to enter/quit the energy-saving mode in many modes:
   Mode 1: The network side (including the base station or other network elements such as a network management server or a network planning tool) judges whether to enter/quit the energy-saving mode according to the current cell load status.
      (a) Enter the energy-saving mode if the cell load is low; or
      (b) Quit the energy-saving mode if the cell load is high.
   Mode 2: A policy of entering/quitting the energy-saving mode is set according to the network running status. For example, the base station is set to enter the energy-saving mode in different time segments everyday (1:00 am to 6:00 am), and/or enter/quit the energy-saving mode according to holidays (the working area enters the energy-saving mode in holidays).
   Mode 3: The base station is triggered to enter/quit the energy-saving mode according to statistics in a period. The network side (including the base station or other network elements such as a network management server or a network planning tool) determines the policy and time of entering/quitting the energy-saving mode according to the statistics in a period so that the base station is triggered to enter/quit the energy-saving mode dynamically at the time specified by the statistics. The energy-saving flag comes in many types, for example, RS energy-saving indication, data transmission bandwidth indication, or an indication of reducing antennas for sending data.
Step 12: Notify the energy-saving mode corresponding to the energy-saving flag to a UE.
   The base station may use a system broadcast message or dedicated signaling (such as reconfiguration signaling) to notify the energy-saving mode corresponding to the energy-saving flag to the UE.
Step 13: Send signals in the energy-saving mode applied after setting the energy-saving flag. For example, when the set energy-saving flag is an RS energy-saving indication, the base station employs the following energy-saving mode: using the whole downlink bandwidth dynamically to send data, and sending RSs only in the downlink bandwidth with data to be sent. The step of using the whole downlink bandwidth dynamically to send data refers to: in the whole range of downlink bandwidth, adjusting the occupied bandwidth dynamically according to the amount of sent data, and using small bandwidth when the amount of sent data is small, or using greater bandwidth when the amount of sent data is greater.
For example, when the set energy-saving flag is a data transmission bandwidth indication, the base station employs the following energy-saving mode: using the bandwidth indicated by the data transmission bandwidth indication as the downlink data transmission bandwidth to send data, and sending RSs only in the bandwidth indicated by the data transmission bandwidth indication or only in the union set of the bandwidths indicated by the data transmission bandwidth indication.
For another example, when the set energy-saving flag is an indication of reducing antennas for sending data, the base station employs the following energy-saving mode: sending data by using an antenna sending mode corresponding to a reduced number of antennas.
In the method for sending signals from a base station provided in this embodiment, an energy-saving flag is set when the base station intends to enter the energy-saving mode, and the energy-saving mode corresponding to the energy-saving flag is notified to the UE; and then signals are sent in the energy-saving mode after the energy-saving flag is set. In this way, the base station can take multiple energy-saving measures under support of the UE. For example, the base station sends RSs only in the downlink bandwidth with data to be sent, or sends RSs only in the bandwidth indicated by a data transmission bandwidth indication, or sends data by using an antenna sending mode corresponding to the reduced number of antennas. Therefore, when the cell load is light, the base station can change the bandwidth of transmitting downlink RSs of the cell dynamically to reduce the energy consumption of the base station without changing the cell bandwidth which is a critical parameter; and the base station relieves impact on the service caused by power consumption reduction but adds no complexity to the UE.
It should be noted that in an LTE system, the modulation mode and the code rate used for sending downlink data are based on a Channel Quality Indication (CQI) fed back by the UE.
Depending on the feedback mode, CQI comes in the following two types:
One is a periodic CQI reported by a Physical Uplink Control Channel (PUCCH), and the periodic CQI is reported in four modes: mode 1-0, mode 1-1, mode 2-0, and mode 2-1.
The other is a nonperiodic CQI reported by a Physical Uplink Shared Channel (PUSCH), and the periodic CQI is reported in five modes: mode 1-2, mode 2-0, mode 2-2, mode 3-0, and mode 3-1.
Depending on the feedback granularity, CQI comes in the following two types:
One is full-bandwidth CQI, namely, 1 CQI is fed back in the whole bandwidth.
The other is subband CQI, namely, the granularity of CQI is 1 subband, and the size of the subband is defined below, with 1 Resource Block (RB) being composed of 12 consecutive subcarriers:

| **Cell bandwidth (unit: RB)** | **Nonperiodic CQI corresponding to mode 2-0 and mode 2-2 (unit: RB)** | **Periodic CQI and nonperiodic CQI of other modes (unit: RB)** |
|---|---|---|
| 8-10 | 2 | 4 |
| 11-26 | 2 | 4 |
| 27-63 | 3 | 6 |
| 64-110 | 4 | 8 |

Therefore, to relieve impact on the CQI measurement caused by sending of RSs, the base station prefers the subband corresponding to the nonperiodic CQI mode when sending RSs in the case that the set energy-saving flag is an RS energy-saving indication or data transmission bandwidth indication. Specifically, one or any combination of the following policies may be applied:
(1) The subband corresponding to the nonperiodic CQI mode is preferred as granularity of adjusting the sending of RSs in order to ensure measurement accuracy.
(2) The nonperiodic CQI of the PUSCH is applied first, and only the subband CQI in the bandwidth of sending RSs is applied after the nonperiodic CQI of the PUSCH is obtained, so as to ensure performance of data transmission.

The following expounds the method for sending signals from a base station in more detail with reference to embodiments.

### Embodiment 1

21. The network side triggers the base station to enter/quit the energy-saving mode.
   The network side may trigger the base station to enter/quit the energy-saving mode according to the current cell load status, or network running status, or statistics in a period. For more details, see the method embodiment of the present invention described above.
22. When intending to enter the energy-saving mode, the base station sets an RS energy-saving indication in a system message, and broadcasts the energy-saving mode corresponding to the RS energy-saving indication to all UEs in the cell.
23. The base station uses the whole downlink bandwidth dynamically according to the amount of service data, and sends RSs only in the downlink bandwidth with data to be sent, so as to ensure data demodulation and channel quality measurement.
   It should be noted that in another embodiment of the present invention, to ensure neighboring cell measurement, the downlink bandwidth used by the base station for sending RSs needs to include the minimum bandwidth required by the base station for neighboring cell measurement. That is, the base station needs to send the RSs in the minimum bandwidth required for neighboring cell measurement (in an LTE system, the minimum bandwidth is 72 subcarriers at the center of the cell).
24. When intending to quit the energy-saving mode, the base station cancels the RS energy-saving indication in the system message, and broadcasts the cancellation of the RS energy-saving indication to all UEs in the cell.
25. The base station uses the whole downlink bandwidth dynamically according to the amount of service data, and sends RSs in the whole downlink bandwidth.

### Embodiment 2

This embodiment differs from the first embodiment in that: when intending to enter the energy-saving mode, the base station uses a dedicated signaling such as reconfiguration signaling to set an RS energy-saving indication, and notifies the energy-saving mode corresponding to the RS energy-saving indication to all connected UEs in the cell; when intending to quit the energy-saving mode, the base station uses a dedicated signaling to cancel the RS energy-saving indication, and notifies the cancellation of the RS energy-saving indication to all connected UEs in the cell.

### Embodiment 3

31. The network side triggers the base station to enter/quit the energy-saving mode.
   The network side may trigger the base station to enter/quit the energy-saving mode according to the current cell load status, or network running status, or statistics in a period. For more details, see the method embodiment of the present invention described above.
32. When intending to enter the energy-saving mode, the base station sets a data transmission bandwidth indication in a system message, and broadcasts the energy-saving mode corresponding to the data transmission bandwidth indication to all UEs in the cell.
   The data transmission bandwidth indication may be expressed in a bitmap mode or a coding mode. The granularity of the bitmap mode may be 1 RB or N RBs. N may be a constant stipulated by a protocol, or a variable. If N is a variable, N may be a value correlated with the cell bandwidth as stipulated in the protocol, or a value broadcast through the system message.
   The coding mode may be a Resource Indication Value (RIV) expression mode in the prior art, or a typical compression coding mode (such as Huffman coding).
33. The base station uses only the bandwidth indicated by the data transmission bandwidth indication when transmitting downlink data, and sends RSs only in the downlink data transmission bandwidth which is broadcast, so as to ensure data demodulation and channel quality measurement.
   It should be noted that to ensure measurement of the neighboring cell, the base station needs to send the RSs in the minimum bandwidth required for neighboring cell measurement (in an LTE system, the minimum bandwidth is 72 subcarriers at the center of the cell).
34. When intending to quit the energy-saving mode, the base station cancels the data transmission bandwidth indication in the system message, and broadcasts the cancellation of the data transmission bandwidth indication to all UEs in the cell.
35. The base station uses the whole downlink bandwidth dynamically according to the amount of service data, and sends the RSs in the whole downlink bandwidth.

### Embodiment 4

This embodiment differs from the third embodiment in that: when intending to enter the energy-saving mode, the base station uses a dedicated signaling to set a data transmission bandwidth indication, and configures downlink data transmission bandwidth for each connected UE in the cell, and the base station uses only the bandwidth indicated by the data transmission bandwidth indication when transmitting downlink data, and sends RSs only in the union set of downlink transmission bandwidths configured for all UEs; when intending to quit the energy-saving mode, the base station uses a dedicated signaling to notify all connected UEs in the cell that the base station will use the whole downlink bandwidth dynamically, and sends RSs in the whole downlink bandwidth.

### Embodiment 5

41. The network side triggers the base station to enter/quit the energy-saving mode.
   The network side may trigger the base station to enter/quit the energy-saving mode according to the current cell load status, or network running status, or statistics in a period. For more details, see the method embodiment of the present invention described above.
42. When intending to enter the energy-saving mode, the base station sets an indication of reducing antennas for sending data in a system message, and broadcasts this indication to all UEs in the cell.
   Upon change of the system message (change from the non-energy-saving mode to the energy-saving mode), the base station sends data by using the antenna sending mode corresponding to the reduced number of antennas. If the reduced number of antennas is 1, the corresponding antenna sending mode is a single-antenna mode; if the reduced number of antennas is greater than 1, the corresponding antenna sending mode is a transmit diversity mode. Upon change of the system message, all connected UEs change the antenna sending mode to the corresponding antenna mode synchronously in line with the base station, namely, to the single-antenna mode or transmit diversity mode.
43. The base station sends data by using the antenna sending mode corresponding to the reduced number of antennas.
44. When intending to quit the energy-saving mode, the base station cancels the indication of reducing antennas for sending data in the system message, and broadcasts the cancellation of the indication to all UEs in the cell.
   Upon change of the system message (change from the energy-saving mode to the non-energy-saving mode), the base station changes to send data through multiple antennas (such as 2 or 4 antennas), and all connected UEs change the antenna sending mode to the transmit diversity mode synchronously in line with the base station.
45. The base station sends data by using the original antenna sending mode.

### Embodiment 6

This embodiment differs from the fifth embodiment in that: when intending to enter the energy-saving mode, the base station sets an indication of reducing antennas for sending data in the system message, and then the base station needs to use a dedicated signaling to set the antenna sending mode corresponding to the reduced number of antennas for each connected UE. For example, if the base station changes from 4 antennas to a single antenna or changes from 2 antennas to a single antenna, the antenna sending mode is a single-antenna mode; when the base station changes from 4 antennas to 2 antennas, the antenna sending mode may be set to the transmit diversity mode or a spatial multiplexing mode. Afterward, the base station applies the antenna sending mode configured through the dedicated signaling to each connected UE in the cell respectively to send data. When intending to quit the energy-saving mode, the base station cancels the indication of reducing antennas for sending data in the system message, and then the base station still needs to use a dedicated signaling to set the transmission mode of all connected UEs to the antenna sending mode applied before the number of antennas is reduced, for example, transmit diversity mode or spatial multiplexing mode. The base station uses the original antenna sending mode to send data.
Based on the method embodiments of the present invention, an energy-saving base station is provided in an embodiment of the present invention. As shown in FIG. 2, the energy-saving base station includes:
an energy-saving flag setting unit 61, configured to set an energy-saving flag of the base station when intending to enter an energy-saving mode;
an energy-saving mode notifying unit 62, configured to notify the energy-saving mode corresponding to the energy-saving flag to a UE; and
a sending unit 63, configured to send signals in the energy-saving mode applied after setting the energy-saving flag.

Corresponding to the first embodiment and the second embodiment above, the energy-saving flag setting unit 61 may include a first setting module 611, configured to set an RS energy-saving indication as the energy-saving flag; and, accordingly, the sending unit 63 may include a first sending module 631, configured to use the whole downlink bandwidth dynamically to send data, and send RSs only in the downlink bandwidth with data to be sent.

Corresponding to the third embodiment and the fourth embodiment above, the energy-saving flag setting unit 61 may include a second setting module 612, configured to set a data transmission bandwidth indication as the energy-saving flag; and, accordingly, the sending unit 63 may include a second sending module 632, configured to use the bandwidth indicated by the data transmission bandwidth indication to send data, and send RSs only in the bandwidth indicated by the data transmission bandwidth indication or only in the union set of the bandwidths indicated by the data transmission bandwidth indication.

Corresponding to the fifth embodiment and the sixth embodiment above, the energy-saving flag setting unit 61 may include a third setting module 613, configured to set an indication of reducing antennas for sending data as the energy-saving flag; and, accordingly, the sending unit 63 may include a third sending module 633, configured to use the antenna sending mode corresponding to the reduced number of antennas to send data.

Through the energy-saving base station provided in this embodiment of the present invention, the energy-saving flag setting unit 61 sets the energy-saving flag when the base station intends to enter the energy-saving mode, and the energy-saving mode notifying unit 62 notifies the corresponding energy-saving mode to the UE; and then the sending unit 63 sends signals in the energy-saving mode after the energy-saving flag is set. In this way, the base station can take multiple energy-saving measures under support of the UE. For example, the base station sends RSs only in the downlink bandwidth with data to be sent, or sends RSs only in the bandwidth indicated by a data transmission bandwidth indication, or sends data by using an antenna sending mode corresponding to the reduced number of antennas. Therefore, when the cell load is light, the base station can change the bandwidth of transmitting downlink RSs of the cell dynamically to reduce the energy consumption of the base station without changing the cell bandwidth which is a critical parameter; and the base station relieves impact on the service caused by power consumption reduction but adds no complexity to the UE.

Persons of ordinary skill in the art should understand that all or part of the steps of the method provided in the embodiments above may be implemented by a program instructing relevant hardware. The program may be stored in a computer-readable storage medium. When the program runs, the program executes the steps of the method specified in any embodiment above. The storage medium may be a magnetic disk, a Compact Disk Read-Only Memory (CD-ROM), a Read-Only Memory (ROM) or a Random Access Memory (RAM).

All functional units in the embodiments of the present invention may be integrated into a processing module, or may exist physically as separate units, or two or more of such units may be integrated into one module. The integrated module may be accomplished through hardware, or through software functional modules. If the integrated module is accomplished through the software functional modules and is sold or used as an independent product, the integrated module may also be stored in a computer-readable storage medium. The storage medium may be a ROM, a magnetic disk, or a CD-ROM.

Although the present invention has been described through some exemplary embodiments, the present invention is not limited to such embodiments.

## Claims

1. A method for sending a signal from a base station, **characterized by**:
setting (11) an energy-saving flag when intending to enter an energy-saving mode, wherein the energy-saving flag corresponds to the energy-saving mode;
notifying (12) the energy-saving mode corresponding to the energy-saving flag to a user equipment; and
sending (13) the signal in the energy-saving mode corresponding to the energy-saving flag; wherein when the energy-saving flag is a reference symbol energy-saving indication, the sending the signal in the energy-saving mode corresponding to the energy-saving flag comprises:
using whole downlink bandwidth dynamically to send data, and sending the reference symbol only in downlink bandwidth with data to be sent.

2. The method according to claim 1, wherein the downlink bandwidth used for sending the reference symbol comprises minimum bandwidth required by the base station for a neighboring cell measurement.

3. The method according to claim 1, further comprising:
using preferably subband corresponding to a nonperiodic channel quality indication (CQI) mode to send the reference symbol.

4. A base station, **characterized by**:
an energy-saving flag setting unit (61), configured to set an energy-saving flag when intending to enter an energy-saving mode, wherein the energy-saving flag corresponds to the energy-saving mode;
an energy-saving mode notifying unit (62), configured to notify a user equipment the energy-saving mode corresponding to the energy-saving flag; and
a sending unit (63), configured to send a signal in the energy-saving mode corresponding to the energy-saving flag;
wherein the energy-saving flag setting unit (61) comprises a first setting module (611) configured to set an reference symbol energy-saving indication as the energy-saving flag; and the sending unit (63) comprises a first sending module (631) configured to use the whole downlink bandwidth dynamically to send data, and send the reference symbol only in the downlink bandwidth with data to be sent.

5. A method for receiving signals in a user equipment, **characterized by**:
receiving an energy-saving mode corresponding to an energy-saving flag; and
receiving a signal sent in the energy-saving mode corresponding to the energy-saving flag;
wherein when the energy-saving flag is a reference symbol energy-saving indication, the receiving the signal sent in the energy-saving mode corresponding to the energy-saving flag comprises:
receiving data, the data being sent by using whole downlink bandwidth dynamically, and receiving the reference symbol sent only in downlink bandwidth with data to be sent.

6. The method according to claim 5, wherein the downlink bandwidth used for sending the reference symbol comprises minimum bandwidth required by the base station for neighboring cell measurement.

7. A user equipment, comprising a memory and at least one processor, wherein the at least one processor is configured for executing the method according to any one of claims 5 to 6.

8. A communication system, comprising: the base station according to claim 4 and the user equipment according to claim 7, wherein the user equipment communicates with the base station.

9. A computer program product, comprising a computer-readable storage medium,
wherein the computer-readable storage medium comprises a program which executes the method according to any one of claims 1 to 3 when the program runs in a computer.

10. A computer program product, comprising a computer-readable storage medium,
wherein the computer-readable storage medium comprises a program which executes the method according to any one of claims 5 to 6 when the program runs in a computer.

## Patentansprüche

1. Verfahren zum Senden eines Signals von einer Basisstation, **gekennzeichnet durch**:
Setzen (11) eines Energiespar-Merkers, wenn beabsichtigt ist, in einen Energiesparmodus einzutreten, wobei der Energiespar-Merker dem Energiesparmodus entspricht;
Melden (12) des Energiesparmodus, der dem Energiespar-Merker entspricht, an ein Benutzergerät; und
Senden (13) des Signals im Energiesparmodus, der dem Energiespar-Merker entspricht; wobei, wenn der Energiespar-Merker eine Referenzsymbol-Energiesparanzeige ist, das Senden des Signals im Energiesparmodus, der dem Energiespar-Merker entspricht, Folgendes umfasst:
dynamisches Verwenden der ganzen Abwärtsstreckenbandbreite, um Daten zu senden, und Senden des Referenzsymbols nur in der Abwärtsstreckenbandbreite mit zu sendenden Daten.

2. Verfahren nach Anspruch 1, wobei die zum Senden des Referenzsymbols verwendete Abwärtsstreckenbandbreite eine minimale Bandbreite umfasst, die für die Basisstation für eine Messung benachbarter Zellen erforderlich ist.

3. Verfahren nach Anspruch 1, das ferner Folgendes umfasst:
vorzugsweise Verwenden eines Subbandes, das einem nicht periodischen Kanalqualitätsanzeige-Modus (CQI-Modus) entspricht, um das Referenzsymbol zu senden.

4. Basistation, **gekennzeichnet durch**:
eine Energiespar-Merker-Setzeinheit (61), die dazu konfiguriert ist, einen Energiespar-Merker zu setzen, wenn beabsichtigt ist, in einen Energiesparmodus einzutreten, wobei das Energiespar-Merker dem Energiesparmodus entspricht;
eine Energiesparmodus-Meldeeinheit (62), die dazu konfiguriert ist, einem Benutzergerät den Energiesparmodus, der dem Energiespar-Merker entspricht, zu melden; und
eine Sendeeinheit (63), die dazu konfiguriert ist, ein Signal im Energiesparmodus, der dem Energiespar-Merker entspricht, zu senden;
wobei die Energiespar-Merker-Setzeinheit (61) ein erstes Setzmodul (611) umfasst, das dazu konfiguriert ist, eine Referenzsymbol-Energiesparanzeige als Energiespar-Merker zu setzen; und die Sendeeinheit (63) ein erstes Sendemodul (631) umfasst, das dazu konfiguriert ist, die ganze Abwärtsstreckenbandbreite dynamisch zu verwenden, um Daten zu senden, und das Referenzsymbol nur in der Abwärtsstreckenbandbreite mit zu sendenden Daten zu senden.

5. Verfahren zum Empfangen von Signalen in einem Benutzergerät, **gekennzeichnet durch**:
Empfangen eines Energiesparmodus, der einem Energiespar-Merker entspricht; und
Empfangen eines Signals, das im Energiesparmodus gesendet wird, der dem Energiespar-Merker entspricht,
wobei, wenn der Energiespar-Merker eine Referenzsymbol-Energiesparanzeige ist, das Empfangen des Signals, das im Energiesparmodus gesendet wird, der dem Energiespar-Merker entspricht, Folgendes umfasst:
Empfangen von Daten, wobei die Daten unter dynamischer Verwendung der ganzen Abwärtsstreckenbandbreite gesendet werden, und Empfangen des Referenzsymbols, das nur in der Abwärtsstreckenbandbreite mit zu sendenden Daten gesendet wird.

6. Verfahren nach Anspruch 5, wobei die zum Senden des Referenzsymbols verwendete Abwärtsstreckenbandbreite eine minimale Bandbreite umfasst, die für die Basisstation für die Messung benachbarter Zellen erforderlich ist.

7. Benutzergerät mit einem Speicher und mindestens einem Prozessor, wobei der mindestens eine Prozessor zum Ausführen des Verfahrens nach einem der Ansprüche 5 bis 6 konfiguriert ist.

8. Kommunikationssystem, das Folgendes umfasst: die Basisstation nach Anspruch 4 und das Benutzergerät nach Anspruch 7, wobei das Benutzergerät mit der Basisstation kommuniziert.

9. Computerprogrammprodukt mit einem computerlesbaren Speichermedium, wobei das computerlesbare Speichermedium ein Programm umfasst, das das Verfahren nach einem der Ansprüche 1 bis 3 ausführt, wenn das Programm in einem Computer läuft.

10. Computerprogrammprodukt mit einem computerlesbaren Speichermedium, wobei das computerlesbare Speichermedium ein Programm umfasst, das das Verfahren nach einem der Ansprüche 5 bis 6 ausführt, wenn das Programm in einem Computer läuft.

## Revendications

1. Procédé pour émettre un signal depuis une station de base, **caractérisé par** les étapes suivantes :
définir (11) un indicateur d'économie d'énergie lorsque l'intention est de passer en mode d'économie d'énergie, dans lequel un indicateur d'économie d'énergie correspond au mode d'économie d'énergie ;
notifier (12) le mode d'économie d'énergie correspondant à l'indicateur d'économie d'énergie à un équipement d'utilisateur ; et
émettre (13) le signal dans le mode d'économie d'énergie correspondant à l'indicateur d'économie d'énergie ; dans lequel lorsque l'indicateur d'économie d'énergie est une indication d'économie d'énergie à symbole de référence, l'émission du signal dans le mode d'économie d'énergie correspondant à l'indicateur d'économie d'énergie comprend les étapes suivantes :
utiliser l'intégralité de la largeur de bande de liaison descendante de manière dynamique pour émettre des données, et émettre le symbole de référence seulement dans la largeur de bande de liaison descendante avec les données à émettre.

2. Procédé selon la revendication 1, dans lequel la largeur de bande de liaison descendante utilisée pour émettre le symbole de référence comprend une largeur de bande minimum requise par la station de base pour une mesure de cellules avoisinantes.

3. Procédé selon la revendication 1, comprenant en outre l'étape suivante :
utiliser de préférence une sous-bande correspondant à un mode d'indication de qualité de canal non périodique (CQI) pour émettre le symbole de référence.

4. Station de base, **caractérisée par** :
une unité de définition d'indicateur d'économie d'énergie (61), configurée pour définir un indicateur d'économie d'énergie lorsque l'intention est de passer en mode d'économie d'énergie, où l'indicateur d'économie d'énergie correspond au mode d'économie d'énergie ;
une unité de notification de mode d'économie d'énergie (62), configurée pour notifier à un équipement d'utilisateur le mode d'économie d'énergie correspondant à l'indicateur d'économie d'énergie ; et
une unité d'émission (63), configurée pour émettre un signal dans le mode d'économie d'énergie correspondant à l'indicateur d'économie d'énergie ;
où l'unité de définition d'indicateur d'économie d'énergie (61) comprend un premier module de définition (611) configuré pour définir une indication d'économie d'énergie à symbole de référence comme indicateur d'économie d'énergie ; et l'unité d'émission (63) comprend un premier module d'émission (631) configuré pour utiliser l'intégralité de la largeur de bande de liaison descendante de manière dynamique pour émettre des données, et émettre le symbole de référence seulement dans la largeur de bande de liaison descendante avec les données à émettre.

5. Procédé pour recevoir des signaux dans un équipement d'utilisateur, **caractérisé par** les étapes suivantes :
recevoir un mode d'économie d'énergie correspondant à un indicateur d'économie d'énergie ; et
recevoir un signal envoyé dans le mode d'économie d'énergie correspondant à l'indicateur d'économie d'énergie ;
où lorsque l'indicateur d'économie d'énergie est une indication d'économie d'énergie à symbole de référence, la réception du signal émis dans le mode d'économie d'énergie correspondant à l'indicateur d'économie d'énergie comprend les étapes suivantes :
recevoir des données, les données étant émises en utilisant l'intégralité de la largeur de bande de liaison descendante de manière dynamique, et recevoir le symbole de référence envoyé seulement dans la largeur de bande de liaison descendante avec les données à émettre.

6. Procédé selon la revendication 5, dans lequel la largeur de bande de liaison descendante utilisée pour émettre le symbole de référence comprend une largeur de bande minimum requise par la station de base pour la mesure de cellules avoisinantes.

7. Equipement d'utilisateur, comprenant une mémoire et au moins un processeur, dans lequel l'au moins un processeur est configuré pour exécuter le procédé selon l'une quelconque des revendications 5 à 6.

8. Système de communication, comprenant : la station de base selon la revendication 4 et l'équipement d'utilisateur selon la revendication 7, où l'équipement d'utilisateur communique avec la station de base.

9. Produit programme informatique, comprenant un support de stockage lisible par ordinateur,
dans lequel le support de stockage lisible par ordinateur comprend un programme qui exécute le procédé selon l'une quelconque des revendications 1 à 3 lorsque le programme est exécuté sur un ordinateur.

10. Produit programme informatique, comprenant un support de stockage lisible par ordinateur,
dans lequel le support de stockage lisible par ordinateur comprend un programme qui exécute le procédé selon l'une quelconque des revendications 5 à 6 lorsque le programme est exécuté sur un ordinateur.
